# EUROPEAN PATENT SPECIFICATION

(11) **EP 3 258 723 B1**
(45) Date of publication and mention of the grant of the patent: **14.10.2020**
(21) Application number: 15885295.4
(22) Date of filing: 31.12.2015
(51) Int. Cl.: H04W 72/12, H04W 76/14, H04L 1/18, H04L 1/08

(54) **DEVICE-TO-DEVICE COMMUNICATION METHOD FOR DATA PACKET RETRANSMISSION**
GERÄT-ZU-GERÄT-KOMMUNIKATIONSVERFAHREN ZUR ERNEUTEN ÜBERTRAGUNG VON DATENPAKETEN
PROCÉDÉ DE COMMUNICATION DE DISPOSITIF À DISPOSITIF POUR LA RETRANSMISSION DE PAQUETS DE DONNÉES

(30) Priority: 17.03.2015 CN 201510117820
(43) Date of publication of application: 20.12.2017
(73) Proprietor: ZTE Corporation, Shenzhen, Guangdong 518057 (CN)
(72) Inventor: DAI, Bo, Shenzhen Guangdong 518057 (CN); WU, Shuanshuan, Shenzhen Guangdong 518057 (CN); CHEN, Lin, Shenzhen Guangdong 518057 (CN); HUANG, Ying, Shenzhen Guangdong 518057 (CN); HE, Haigang, Shenzhen Guangdong 518057 (CN)
(74) Representative: Aipex B.V.
(86) International application number: PCT/CN2015/100323
(87) International publication number: WO 2016/145927

(56) References cited:
- WO-A1-2015/021185
- WO-A1-2015/021185
- CN-A- 102 547 871
- CN-A- 103 209 487
- CN-A- 103 338 497
- CN-A- 103 686 676
- US-A1- 2013 225 184

## Description

### Technical Field

The present invention relates to the field of radio communication, in particular to a Device to Device (D2D) communication method.

### Background

With the diversification of mobile communication services, e.g., with popularization of applications such as social network and electronic payment in radio communication systems, demands for service transmission between users of near field ever increase. As a result, a Device to Device (D2D) communication mode is increasingly and widely concerned. D2D refers to that service data are directly transmitted by a source User Equipment (UE) to a destination UE through an air interface without being forwarded through a base station and a core network, and may also called as Proximity Service (ProSe). For users of near field communication, D2D not only saves radio spectrum resources, but also decreases data transmission pressure of the core network.

Radio communication usually includes communication modes such as broadcast, groupcast and unicast. Broadcast usually has no specific receiving end, e.g., all devices which are interested by a service sent by a sending end can receive this service. Groupcast is one-to-multiple communication and terminals which form a communication group can receive a service sent by a sending end. Unicast refers to sending a service to a specific receiving end.

Therefore, on one hand, if the above-mentioned radio communication modes can all be supported in D2D communication, undoubtedly the application scope of D2D communication can be expanded. On the other hand, the above-mentioned three communication modes respectively have different features and thus optimum schemes for applying D2D communication to each communication mode may be different. However, a scheme aiming at the above-mentioned problem is not provided in the existing art.

The document WO2015/021185A1 discloses a scheme of implementing scheduling for device-to-device. A WTRU may determine whether the WTRU has D2D data to transmit. The WTRU may determine a set of allowed SA resources and/or allowed D2D data resources for transmission. The WTRU may select one or more transmission parameters. The WTRU may select one or more transmission patterns. The WTRU may transmit D2D data over the set of allowed D2D resources using the selected transmission patterns and according to the selected transmission parameters.

The document US2013/225184A1 discloses a system for operating a communications controller for a group of user equipments engaged in a DMC link in a wireless communications system.

### Summary

In order to solve the problem existing in the existing technology, examples of the present invention provide a Device to Device (D2D) communication method according to claim 1 or 10. Further improvements and examples are provided in the dependent claims.

Also provided is a D2D communication method applied to a first UE, which comprises:
the first UE determining a location of a resource configured in a first scheduling windows for D2D communication receiving; and
the first UE receiving D2D communication data packets sent by a second UE on the resource of which the location is determined.

In an exemplary example, the first scheduling window includes: Hybrid Automatic Repeat reQuest (HARQ) scheduling window, corresponding scheduled resource allocation (SA) window in D2D communication or joint scheduling window for multiple data packets.

In an exemplary example, a scheduling relation between scheduling windows is preset in the first scheduling window, or a scheduling relation between the scheduling windows is indicated according to signaling sent by a first transmission node covering the first UE,
herein the scheduling relation is determined according to at least one of the following information:
a maximum number of scheduling windows supported by the first transmission node, data packet scheduling timing, data packet feedback timing, data packet retransmission timing, scheduling window period, and time-domain locations of scheduling windows.

In an exemplary example, data packets corresponding to each sub-frame in the first scheduling window are different from one another or one data packet in the first scheduling window is mapped to all available sub-frames in the first scheduling window.

In an exemplary example, all data packets in the first scheduling window correspond to a same piece of scheduling information, each data packet in the first scheduling window corresponds to one piece of scheduling information, or all data packets in the first scheduling window are divided into multiple data packet groups and each data packet group corresponds to one piece of scheduling information.

In an exemplary example, the scheduling information is retransmitted in time domain in the first scheduling window.

In an exemplary example, when the first UE and/or the second UE are/is in a non-coverage scenario, frequency-domain locations of multiple data packets corresponding to one piece of scheduling information in the first scheduling window are different; and
when the first UE and/or the second UE are/is in a coverage scenario, frequency-domain locations of multiple data packets corresponding to one piece of scheduling information in the first scheduling window are the same.

In an exemplary example, when data packets corresponding to each sub-frame for transmitting data packets in the first scheduling window are different from one another, locations of a retransmitted data packet and a firstly-transmitted data packet in the first scheduling window are the same; or in a non-coverage scenario, a predefined offset is used between the locations of the retransmitted data packet and the firstly-transmitted data packet in the first scheduling window, and the offset is determined according to at least one of a first user ID, a second user ID and an offset indicated by scheduling information.

In an exemplary example, the scheduling information includes data packet indication information and the data packet indication information is configured to indicate whether to determine a data packet type indicated by the scheduling information according to feedback information corresponding to the first UE.

In an exemplary example, the method further includes:
the first UE performing joint feedback on feedback information corresponding to data packets in the first scheduling window.

In an exemplary example, a sub-frame index of the feedback information is determined according to a sub-frame index for transmitting a last data packet in the first scheduling window.

In an exemplary example, a number of bits of the feedback information is determined according to a maximum number of sub-frames scheduled by the scheduling information; or
a number of bits of the feedback information is determined according to a maximum number of data packets scheduled by the scheduling information; or
a number of bits of the feedback information is determined according to a maximum number of sub-frames configured by the first scheduling window for transmitting data packets.

In an exemplary example, a location of the feedback information is determined according to ranks of locations of the data packets in the first scheduling window from front to back.

In an exemplary example, a feedback channel resource corresponding to the feedback information is determined according to scheduling information corresponding to the first scheduling window or is determined according to configuration information of a first transmission node corresponding to the first UE.

Also provided is a Device to Device (D2D) communication device, applied to a first UE, which comprises:
a first resource location determination unit configured to determine a location of a resource configured in a first scheduling window for D2D communication receiving; and
a data packet receiving unit configured to receive D2D communication data packets sent by a second UE on the resource of which the location is determined.

In an exemplary example, the first scheduling window includes: Hybrid Automatic Repeat reQuest (HARQ) scheduling window, corresponding scheduled resource allocation (SA) window in D2D communication, or joint scheduling window for multiple data packets.

In an exemplary example, a scheduling relation between scheduling windows is preset in the first scheduling windows, or a scheduling relation between the scheduling windows is indicated according to signaling sent by a first transmission node covering the first UE,
wherein the scheduling relation is determined according to at least one of the following information:
a maximum number of scheduling windows supported by the first transmission node, data packet scheduling timing, data packet feedback timing, data packet retransmission timing, scheduling window period, and time-domain locations of scheduling windows.

In an exemplary example, data packets corresponding to each sub-frame in the first scheduling window are different from one another or one data packet in the first scheduling window is mapped to all available sub-frames in the first scheduling window.

In an exemplary example, all data packets in the first scheduling window correspond to a same piece of scheduling information, each data packet in the first scheduling window corresponds to one piece of scheduling information, or all data packets in the first scheduling window are divided into multiple data packet groups and each data packet group corresponds to one piece of scheduling information.

In an exemplary example, the scheduling information is retransmitted in time domain in the first scheduling window.

In an exemplary example, when the first UE and/or the second UE are/is in a non-coverage scenario, frequency-domain locations of multiple data packets corresponding to one piece of scheduling information in the first scheduling window are different; and
when the first UE and/or the second UE are/is in a coverage scenario, frequency-domain locations of multiple data packets corresponding to one piece of scheduling information in the first scheduling window are the same.

In an exemplary example, when data packets corresponding to each sub-frame for transmitting data packets in the first scheduling window are different from one another, locations of a retransmitted data packet and a firstly-transmitted data packet in the first scheduling window are the same; or in a non-coverage scenario, a predefined offset is used between the locations of the retransmitted data packet and the firstly-transmitted data packet in the first scheduling window, and the offset is determined according to at least one of a first user ID, a second user ID and an offset indicated by scheduling information.

In an exemplary example, the scheduling information includes data packet indication information and the data packet indication information is configured to indicate whether to determine a data packet type indicated by the scheduling information according to feedback information corresponding to the first UE.

In an exemplary example, the device further includes a feedback unit configured to perform joint feedback on feedback information corresponding to data packets in the first scheduling window.

In an exemplary example, the feedback unit is configured to determine a sub-frame index of the feedback information according to a sub-frame index for transmitting a last data packet in the first scheduling window.

In an exemplary example, a number of bits of the feedback information is determined according to a maximum number of sub-frames scheduled by the scheduling information; or
a number of bits of the feedback information is determined according to a maximum number of data packets scheduled by the scheduling information; or
a number of bits of the feedback information is determined according to a maximum number of sub-frames configured by the first scheduling window for transmitting data packets.

In an exemplary example, a location of the feedback information is determined according to ranks of locations of the data packets in the first scheduling window from front to back.

In an exemplary example, a feedback channel resource corresponding to the feedback information is determined according to scheduling information corresponding to the first scheduling window or is determined according to configuration information of a first transmission node corresponding to the first UE.

Also provided is a Device to Device (D2D) communication method, applied to a first transmission node, which comprises:
a first transmission node determining information about a first UE to which a second UE transmits data; and
the first transmission node sending the information about the first UE to the second UE,
herein the information about the first UE is carried in scheduling information sent by the first transmission node to the second UE; or the information about the first UE is determined according to a resource on which scheduling information is located.

In an exemplary example, the first transmission node sends information to notify the first UE to be configured to receive identification information of the second UE and/or the scheduling information sent by the second UE.

Also provided is a Device to Device (D2D) communication device, applied to a first transmission node, which comprises:
an information determination unit configured to determine information about a first UE to which a second UE transmits data; and
an information sending unit configured to send the information about the first UE to the second UE,
herein the information about the first UE is carried in scheduling information sent by the first transmission node to the second UE; or the information about the first UE is determined according to a resource on which scheduling information is located.

In an exemplary example, the information sending unit is configured to send information to notify the first UE to be configured to receive identification information of the second UE and/or the scheduling information sent by the second UE.

Also provided is a Device to Device (D2D) communication method, applied to a second UE, which comprises:
a second UE determining a location of a resource configured in a first scheduling window for D2D communication; and
the second UE sending D2D communication data packets on the resource of which the location is determined.

In an exemplary example, the first scheduling window includes: Hybrid Automatic Repeat reQuest HARQ scheduling window, corresponding scheduled resource allocation SA window in D2D communication, or joint scheduling window for multiple data packets.

In an exemplary example, a scheduling relation between scheduling windows is preset in the first scheduling window, or a scheduling relation between the scheduling windows is indicated according to signaling sent by a first transmission node covering the first UE,
herein the scheduling relation is determined according to at least one of the following information:
a maximum number of scheduling windows supported by the first transmission node, data packet scheduling timing, data packet feedback timing, data packet retransmission timing, scheduling window period, and time-domain locations of scheduling windows.

In an exemplary example, data packets corresponding to each sub-frame in the first scheduling window are different from one another or one data packet in the first scheduling window is mapped to all available sub-frames in the first scheduling window.

In an exemplary example, all data packets in the first scheduling window correspond to a same piece of scheduling information, each data packet in the first scheduling window corresponds to one piece of scheduling information, or all data packets in the first scheduling window are divided into multiple data packet groups and each data packet group corresponds to one piece of scheduling information.

In an exemplary example, the scheduling information is retransmitted in time domain in the first scheduling window.

In an exemplary example, when the first UE and/or the second UE are/is in a non-coverage scenario, frequency-domain locations of multiple data packets corresponding to one piece of scheduling information in the first scheduling window are different; and
when the first UE and/or the second UE are/is in a coverage scenario, frequency-domain locations of multiple data packets corresponding to one piece of scheduling information in the first scheduling window are the same.

In an exemplary example, when data packets corresponding to each sub-frame for transmitting data packets in the first scheduling window are different from one another, locations of a retransmitted data packet and a firstly-transmitted data packet in the first scheduling window are the same; or in a non-coverage scenario, a predefined offset is used between the locations of the retransmitted data packet and the firstly-transmitted data packet in the first scheduling window, and the offset is determined according to at least one of a first user ID, a second user ID and an offset indicated by scheduling information.

In an exemplary example, the scheduling information includes data packet indication information and the data packet indication information is configured to indicate whether to determine a data packet type indicated by the scheduling information according to feedback information corresponding to the first UE.

In an exemplary example, the method further includes:
the second UE receiving feedback information of the first UE, herein the feedback information includes all feedback information corresponding to data packets in the first scheduling window.

In an exemplary example, a sub-frame index of the feedback information is determined according to a sub-frame index for transmitting a last data packet in the first scheduling window.

In an exemplary example, a number of bits of the feedback information is determined according to a maximum number of sub-frames scheduled by the scheduling information; or
a number of bits of the feedback information is determined according to a maximum number of data packets scheduled by the scheduling information; or
a number of bits of the feedback information is determined according to a maximum number of sub-frames configured by the first scheduling window for transmitting data packets.

In an exemplary example, a location of the feedback information is determined according to ranks of locations of the data packets in the first scheduling window from front to back.

In an exemplary example, a feedback channel resource corresponding to the feedback information is determined according to scheduling information corresponding to the first scheduling window or is determined according to configuration information of a first transmission node corresponding to the first UE.

Also provided is a Device to Device D2D communication device, applied to a second UE, which comprises:
a second resource location determination unit configured to determine a location of a resource configured in a first scheduling window for D2D communication; and
a data packet sending unit configured to send D2D communication data packets on the resource of which the location is determined.

In an exemplary example, the first scheduling window includes: Hybrid Automatic Repeat reQuest (HARQ) scheduling window, corresponding scheduled resource allocation (SA) window in D2D communication, or joint scheduling window for multiple data packets.

In an exemplary example, a scheduling relation between scheduling windows is preset in the first scheduling window, or a scheduling relation between the scheduling windows is indicated according to signaling sent by a first transmission node covering the first UE,

herein the scheduling relation is determined according to at least one of the following information:
a maximum number of scheduling windows supported by the first transmission node, data packet scheduling timing, data packet feedback timing, data packet retransmission timing, scheduling window period, and time-domain locations of scheduling windows.

In an exemplary example, data packets corresponding to each sub-frame in the first scheduling window are different from one another or one data packet in the first scheduling window is mapped to all available sub-frames in the first scheduling window.

In an exemplary example, all data packets in the first scheduling window correspond to a same piece of scheduling information, each data packet in the first scheduling window corresponds to one piece of scheduling information, or all data packets in the first scheduling window are divided into multiple data packet groups and each data packet group corresponds to one piece of scheduling information.

In an exemplary example, the scheduling information is retransmitted in time domain in the first scheduling window.

In an exemplary example, when the first UE and/or the second UE are/is in a non-coverage scenario, frequency-domain locations of multiple data packets corresponding to one piece of scheduling information in the first scheduling window are different; and
when the first UE and/or the second UE are/is in a coverage scenario, frequency-domain locations of multiple data packets corresponding to one piece of scheduling information in the first scheduling window are the same.

In an exemplary example, when data packets corresponding to each sub-frame for transmitting data packets in the first scheduling window are different from one another, locations of a retransmitted data packet and a firstly-transmitted data packet in the first scheduling window are the same; or in a non-coverage scenario, a predefined offset is used between the locations of the retransmitted data packet and the firstly-transmitted data packet in the first scheduling window, and the offset is determined according to at least one of a first user ID, a second user ID and an offset indicated by scheduling information.

In an exemplary example, the scheduling information includes data packet indication information and the data packet indication information is configured to indicate whether to determine a data packet type indicated by the scheduling information according to feedback information corresponding to the first UE.

In an exemplary example, the device further includes:
a feedback receiving unit configured to receive feedback information of the first UE, herein the feedback information includes all feedback information corresponding to data packets in the first scheduling window.

In an exemplary example, a sub-frame index of the feedback information is determined according to a sub-frame index for transmitting a last data packet in the first scheduling window.

In an exemplary example, a number of bits of the feedback information is determined according to a maximum number of sub-frames scheduled by the scheduling information; or
a number of bits of the feedback information is determined according to a maximum number of data packets scheduled by the scheduling information; or
a number of bits of the feedback information is determined according to a maximum number of sub-frames configured by the first scheduling window for transmitting data packets.

In an exemplary example, a location of the feedback information is determined according to ranks of locations of the data packets in the first scheduling window from front to back.

In an exemplary example, a feedback channel resource corresponding to the feedback information is determined according to scheduling information corresponding to the first scheduling window or is determined according to configuration information of a first transmission node corresponding to the first UE.

Also provided is a computer storage medium, storing computer-executable instructions used for executing the D2D communication method applied to the first UE.

Also provided is a computer storage medium, storing computer-executable instructions used for executing the D2D communication method applied to the first transmission node.

Also provided is a computer storage medium, storing computer-executable instructions used for executing the D2D communication method applied to the second UE.

With the D2D communication methods and devices and the compute storages medium provided by the examples of the present invention, the problem of HARQ transmission based on scheduling windows during D2D communication is solved. Without remarkably increasing terminal realization complexity and signaling overhead, the examples of the present invention realize D2D unicast communication.

### Brief Description of Drawings

FIG. 1 illustrates a schematic diagram of deployment of a cellular network.
FIG. 2 illustrates a schematic diagram of a radio resource structure.
FIG. 3 illustrates a schematic flowchart of a D2D communication method according to an example of the present invention.
FIG. 4 illustrates a schematic flowchart of another D2D communication method according to an example of the present invention.
FIG. 5 illustrates a schematic flowchart of still another D2D communication method according to an example of the present invention.
FIG. 6 illustrates a schematic structural diagram of a D2D communication device according to an example of the present invention.
FIG. 7 illustrates a schematic structural diagram of another D2D communication device according to an example of the present invention.
FIG. 8 illustrates a schematic structural diagram of still another D2D communication device according to an example of the present invention.

### Detailed Description

The scheme of the present invention will be further described below in detail with reference to the drawings in combination with specific examples.

The examples of the present invention are applicable to cellular radio communication systems or networks. Common cellular radio communication systems may be based on Code Division Multiplexing Access (CDMA) technology, Frequency Division Multiplexing Access (FDMA) technology, Orthogonal-FDMA (OFDMA) technology, Single Carrier-FDMA (SC-FDMA) technology and the like. For example, downlinks (or called as forward links) of 3rd Generation Partnership Project (3GPP) Long Term Evolution (LTE)/LTED-Advanced (LTE-A) cellular communication systems are based on OFDMA technology, and uplinks (or called as reverse links) are based on SC-FDMA technology. In future, it is possible that hybrid multiplexing access technologies are supported on one link.

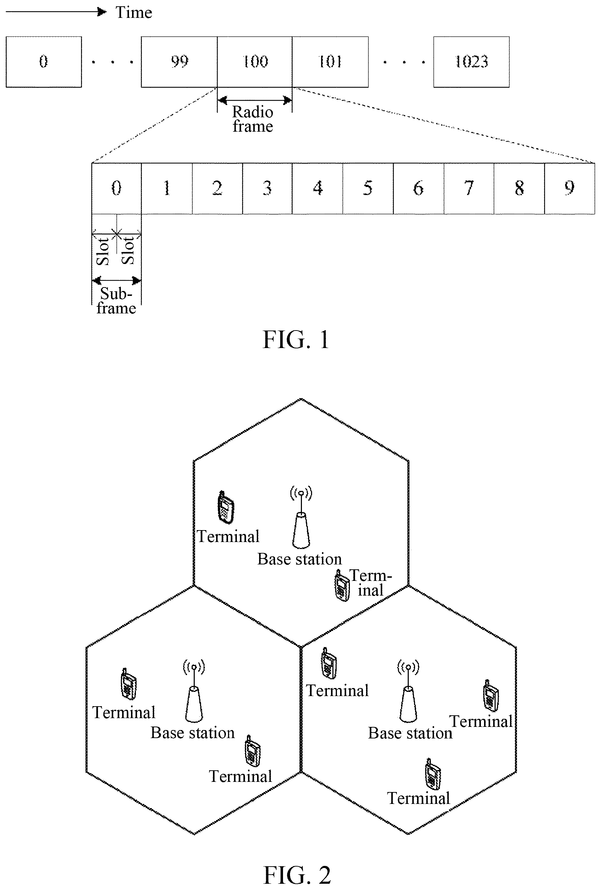

In an OFDMA/SC-FDMA system, radio resources configured for communication are in a time-frequency two-dimension form. For example, for an LTE/LTE-A system, communication resources of an uplink and a downlink are divided by taking radio frame as unit in a temporal direction. Each radio frame has a length of 10ms includes 10 sub-frames each having a length of 1ms, and each sub-frame includes two slots each having a length of 0.5ms. Usually, serial numbers of sub-frames in each radio frame are 0-9 and serial numbers of radio frames are 0-1023, as illustrated in FIG. 1.

In a frequency direction, resources are divided by taking sub-carrier as unit. Specifically, in communication, a minimum unit for frequency-domain resource allocation is Resource Block (RB), which corresponds to one Physical RB (PRB) of a physical resource. One PRB includes 12 sub-carriers in a frequency domain and corresponds to one slot in time domain. Two PRBs of which time domains are adjacent in a sub-frame are called as a PRB pair. A resource corresponding to one sub-carrier on each Orthogonal Frequency Division Multiplexing (OFDM)/Single Carrier-Orthogonal Frequency Division (SC-FDM) symbol is called as a Resource Element (RE).

FIG. 2 illustrates a schematic diagram of network deployment of a cellular radio communication system. The system illustrated in FIG. 2 may be a 3GPP LTE/LTE-A system or another cellular radio communication system. In an access network of the cellular radio communication system, network equipment generally includes a certain number of base stations (or called as NodeB, or called as evolved NodeB, or called as enhanced NodeB), and other network entities and network elements. Or, in general, they may also be collectively called as network side (Evolved Universal Terrestrial Radio Access Network (E-UTRAN)) in 3GPP. Herein, the base stations described here may also include Low Power Nodes (LPNs) in the network, such as pico, relay, femto and Home eNB, which may also be collectively called as small cell. For the sake of simplicity in description, FIG. 2 only illustrates three base stations. A base station provides a certain radio signal coverage range and terminals (or called as user equipment (UE) or devices) in this coverage range can perform radio communication with the base station. A radio signal coverage area of one base station may be divided into one or more cells or sectors based on certain criteria. For example, a radio signal coverage area of one base station is divided into three cells.

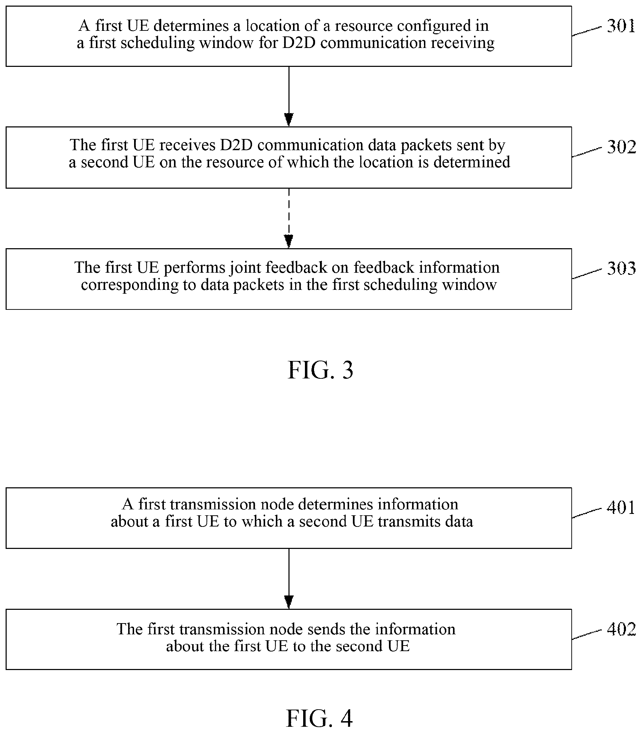

An example of the present invention provides a Device to Device (D2D) communication method. As illustrated in FIG. 3, the method mainly includes the following steps.

In step 301, a first UE determines a location of a resource configured in a first scheduling window for D2D communication receiving.

In step 302, the first UE receives D2D communication data packets sent by a second UE on the resource of which the location is determined.

The method provided by the example of the present invention is compatible with the existing scheduling-window-based multicast mechanism which has already been supported and can reduce terminal realization costs.

In the example of the present invention, the first scheduling window includes: a scheduling window corresponding to D2D communication supporting a Hybrid Automatic Repeat reQuest (HARQ) function, i.e., HARQ scheduling window for short, a scheduled resource allocation (SA) window corresponding to D2D communication, or a joint scheduling window for multiple data packets. Herein the HARQ scheduling window can realize scheduling flexibility and improve data transmission efficiency; and the SA window supports transmission multicast services. A method for reusing an existing SA window can realize compatibility and decrease realization complexity, and scheduling realized based on an SA window can decrease signaling overhead.

There is a preset scheduling relation between scheduling windows, or a scheduling relation between the scheduling windows is indicated according to signaling sent by a first transmission node covering the first UE.

The scheduling relation may be determined according to at least one of the following information: a maximum number of scheduling windows supported by the first transmission node, data packet scheduling timing, data packet feedback timing, data packet retransmission timing, scheduling window period, and time-domain locations of scheduling windows.

Supposing that there are M scheduling windows at most, a preset relation between scheduling windows may be as follow:
data packets can only be transmitted in scheduling windows corresponding to a same virtual scheduling window index. For example, supposing there are four continuous scheduling windows in time domain, a retransmission scheduling window of a first scheduling window is a third scheduling window and a retransmission scheduling window of a second scheduling window is a fourth scheduling window.

Or, a mode of adjacent scheduling windows is used, that is, a retransmission scheduling window of a current scheduling window is a next scheduling window.

Or, scheduling windows within a scheduling window configuration period are numbered according to serial numbers of radio frames. Supposing that k is a current scheduling window index, a virtual scheduling window corresponding to this scheduling window is k mod M.

Or, supposing that M scheduling windows are supported at most, a scheduling window corresponding to a current scheduling window is indicated with X bits. For example, if four scheduling windows are supported at most, a virtual scheduling window index corresponding to a current scheduling window is indicated with 2 bits, and it can indicate that data packets in which previous scheduling window are retransmitted in the current scheduling window.

In the example of the present invention, the transmission of the data packets in the first scheduling window includes the following situation: data packets corresponding to each sub-frame for transmitting the data packets in the first scheduling window are different from one another, or the data packets in the first scheduling window are mapped to each sub-frame configured for transmitting the data packets in the first scheduling window.

For example, each sub-frame in the scheduling window corresponds to one data packet and the data packets corresponding to different sub-frames are different, or one data packet is mapped to all available sub-frames in the scheduling window.

In the example of the present invention, all data packets in the first scheduling window correspond to a same piece of scheduling information. Or, each data packet in the first scheduling window corresponds to one piece of scheduling information. Or all data packets in the first scheduling window are divided into multiple data packet groups and each data packet group corresponds to one piece of scheduling information.

In addition, the scheduling information may be retransmitted in time domain in the first scheduling window.

Besides, when the first UE and/or the second UE are/is in a non-coverage scenario, frequency-domain locations of multiple data packets corresponding to one piece of scheduling information in the first scheduling window are different.

When the first UE and/or the second UE are/is in a coverage scenario, frequency-domain locations of multiple data packets corresponding to one piece of scheduling information in the first scheduling window are the same.

When data packets corresponding to each sub-frame for transmitting data packets in the first scheduling window are different from one another, locations of a retransmitted data packet and a firstly-transmitted data packet in the first scheduling window are the same. Or in a non-coverage scenario, a predefined offset is used between the locations of the retransmitted data packet and the firstly-transmitted data packet in the first scheduling window, and the offset is determined according to at least one of a first user ID, a second user ID and an offset indicated by scheduling information.

In the example of the present invention, the scheduling information corresponding to the data packets includes data packet indication information and the data packet indication information is configured to indicate whether to determine a data packet type indicated by the scheduling information according to feedback information corresponding to the first UE.

"Corresponding" refers to correspondence between a scheduling window corresponding to feedback information and a retransmission scheduling window. For example, a retransmission scheduling window corresponds to feedback information of a previous corresponding scheduling window, and a data packet type of current scheduling is determined in a current scheduling window according to feedback information of the previous corresponding scheduling window.

For example, the number of sub-frames for transmitting data packets in the first scheduling window is four, and after the first UE receives data on the four sub-frames, feedback information ACK, NACK, ACK and NACK are respectively generated. If the second UE receives the feedback information of the first UE, the first UE sets data packet indication information corresponding to the corresponding retransmission scheduling window as that the data packet type indicated by the scheduling information is determined according to the feedback information corresponding to the first UE. If the data packets are scheduled still on the sub-frames in the scheduling window or the number of sub-frames scheduled in the scheduling window is still four, data packets corresponding to the sub-frames are a new data packet, a retransmitted data packet, a new data packet and a retransmitted data packet. If the second UE does not receive the feedback information of the first UE, the first UE sets data packet indication information corresponding to the corresponding retransmission scheduling window as that the data packet type indicated by the scheduling information is not determined according to the feedback information corresponding to the first UE. At this moment, the first UE needs to determine the type of each data packet according to the scheduling information corresponding to the scheduling window, or defaults the data packets in the scheduling window to be new data packets.

This mode can reduce the overhead for indicating new and old data packets. A common technical scheme is that each data packet corresponds to 1 bit which represents a new data packet or a retransmitted data packet. The signaling overhead increases with the increase of scheduled data packets when this scheme is used. If the signaling is defined according to the maximum number of data packets, when a small amount of data packets are scheduled, signaling is caused to be idle and resource waste is caused. If the number of bits is dynamic, the number of bits corresponding to a downlink control signaling format is caused to dynamically change and the detection of the receiving end is not facilitated. With the above-mentioned method, the overhead of the signaling can be reduced and the complexity of the detection of the receiving end can be decreased at the same time.

In the above-mentioned example, 1 bit is used. More than 1 bit such as 2 bits may also be used. In addition to the above-mentioned two states, one or two states are further added, such as that data packets are in the same state as the data packets in a previous corresponding scheduling window, or all data packets are retransmitted packets.

Data packet indication information includes three states, which are any three of the following states: states of data packets are determined according to feedback information, states of data packets are determined according to states of data packets in a previous corresponding scheduling window, all data packets are new data packets and all data packets are retransmitted data packets. For example, states of data packets are determined according to feedback information, states of data packets are determined according to states of data packets in a previous corresponding scheduling window, and all data packets are new data packets; or, states of data packets are determined according to feedback information, states of data packets are determined according to states of data packets in a previous corresponding scheduling window, and all data packets are retransmitted data packets.

Data packet indication information includes two states, which are any two of the following states: states of data packets are determined according to feedback information, states of data packets are determined according to states of data packets in a previous corresponding scheduling window, all data packets are new data packets and all data packets are retransmitted data packets. For example, states of data packets are determined according to feedback information and all data packets are new data packets; or, states of data packets are determined according to feedback information and all data packets are retransmitted data packets; or, states of data packets are determined according to feedback information, states of data packets are determined according to states of data packets in a previous corresponding scheduling window.

Data packet indication information includes four states. For example, states of data packets are determined according to feedback information, states of data packets are determined according to states of data packets in a previous corresponding scheduling window, all data packets are new data packets, and all data packets are retransmitted data packets.

This data packet indication method may also be configured for other data communication, such as data communication between UE and a base station, or communication between base stations, or communication between a base station and a relay.

Herein, sub-frames for transmitting data in the scheduling window are determined according to the data packet indication information, including that: when the data packet indication information indicates to acknowledge data packet information according to feedback information of the first UE, sub-frame locations indicated by scheduling information corresponding to the scheduling window are transmission locations of the new data packets, and sub-frame locations corresponding to retransmitted data packets are the same as the transmission locations of the data packets corresponding to the feedback information in the scheduling window.

In one implementation mode, the example of the present invention may further include step 303, in which the first UE performs joint feedback on feedback information corresponding to data packets in the first scheduling window.

After the first UE receives the data packets transmitted by the second UE in the first scheduling window, the first UE feeds back overall the feedback information of the same data packet corresponding to the scheduling information in the first scheduling window.

A sub-frame index of the feedback information is determined according to a sub-frame index for transmitting a last data in the first scheduling window.

For example, if a subframe index of a last data packet is y, a subframe index of feedback information is y+h, h is a predefined value which is determined by a TDD system according to a current ratio of uplink and downlink and period configuration information of the scheduling window.

In the example of the present invention, the number of bits of the feedback information is determined according to the maximum number of sub-frames scheduled by the scheduling information. Or the number of bits of the feedback information is determined according to the maximum number of data packets scheduled by the scheduling information. Or the number of bits of the feedback information is determined according to the maximum number of sub-frames configured by the scheduling window for transmitting data packets.

In the example of the present invention, a location of the feedback information is determined according to ranks of locations of the data packets in the first scheduling window from front to back.

A feedback channel resource corresponding to the feedback information is determined according to scheduling information corresponding to the first scheduling window or is determined according to configuration information of a first transmission node (eNB) corresponding to the first UE.

The example of the present invention further provides a computer storage medium storing computer-executable instructions used for executing the D2D communication method applied to the first UE according to the example of the present invention.

The first transmission node according to the example of the present invention will be introduced below. The first transmission node according to the example of the present invention is a node covering the first UE and/or the second UE.

A D2D communication method applied to a first transmission node, as illustrated in FIG. 4, includes the following steps.

In step 401, a first transmission node determines information about a first UE to which a second UE transmits data.

In step 402, the first transmission node sends the information about the first UE to the second UE. In other words, the first transmission node sends information to notify the second UE that an object of data transmission is the first UE.

Herein, the information about the first UE is carried in scheduling information sent by the first transmission node to the second UE; or the information about the first UE is determined according to a resource on which scheduling information is located. For example, the first transmission node pre-configures that different second UEs correspond to different resources, different second UEs correspond to different resource areas, and if the first UE detects the scheduling information in an area, the first UE acquires information that a data transmission object is a corresponding second UE.

Besides, after the first UE acquires the information about the corresponding second UE, data packets of SA and/or data packets scheduled by SA are scrambled using the information. Specific scrambling modes include various scrambling modes such as CRC scrambling, bit-level scrambling, etc.

The first transmission node may send information to notify the first UE to be configured to receive identification information of the second UE and/or the scheduling information sent by the second UE.

The first UE sends feedback information to the first transmission node, and when the first transmission node transmits scheduling information to the second UE, the scheduling information includes the received feedback information of the first UE.

The example of the present invention further provides a computer storage medium storing computer-executable instructions used for executing the D2D communication method applied to the first transmission node according to the example of the present invention.

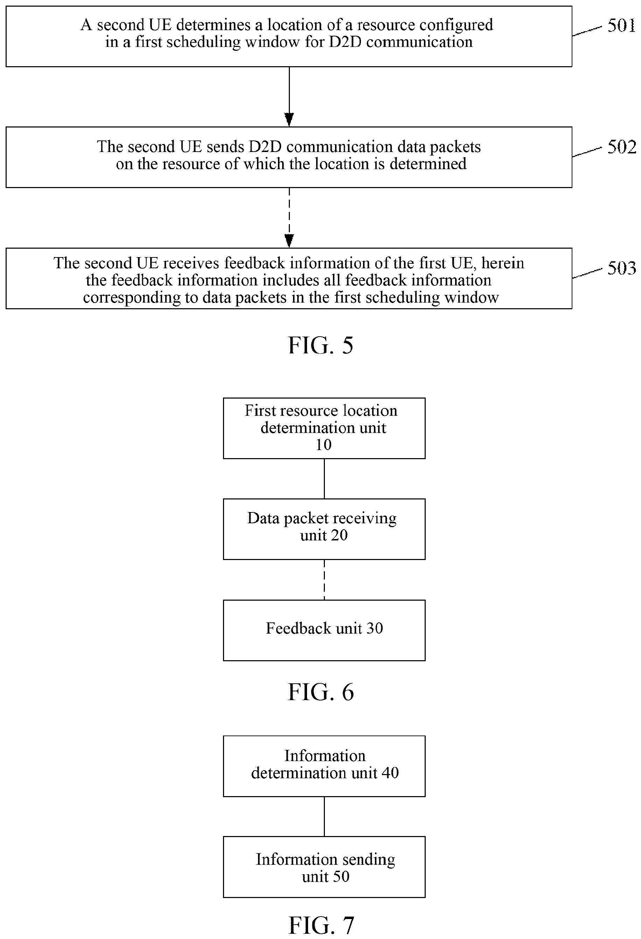

A second UE according to the example of the present invention will be introduced below. A D2D communication method applied to a second UE, as illustrated in FIG. 5, includes the following steps.

In step 501, a second UE determines a location of a resource configured in a first scheduling window for D2D communication.

In step 502, the second UE sends D2D communication data packets on the resource of which the location is determined.

Herein, the first scheduling window include: Hybrid Automatic Repeat reQuest (HARQ) scheduling window, corresponding scheduled resource allocation (SA) window in D2D communication, or joint scheduling window for multiple data packets.

A scheduling relation between scheduling windows is preset in the first scheduling window, or a scheduling relation between the scheduling windows is indicated according to signaling sent by a first transmission node covering the first UE.

The scheduling relation is determined according to at least one of the following information:
a maximum number of scheduling windows supported by the first transmission node, data packet scheduling timing, data packet feedback timing, data packet retransmission timing, scheduling window period and time-domain locations of scheduling windows.

Data packets corresponding to each sub-frame in the first scheduling window are different from one another or one data packet in the first scheduling window is mapped to all available sub-frames in the first scheduling window.

All data packets in the first scheduling window correspond to a same piece of scheduling information, each data packet in the first scheduling window corresponds to one piece of scheduling information, or all data packets in the first scheduling window are divided into multiple data packet groups and each data packet group corresponds to one piece of scheduling information.

The scheduling information is retransmitted in time domain in the first scheduling window.

When the first UE and/or the second UE are/is in a non-coverage scenario, frequency-domain locations of multiple data packets corresponding to one piece of scheduling information in the first scheduling window are different.

When the first UE and/or the second UE are/is in a coverage scenario, frequency-domain locations of multiple data packets corresponding to one piece of scheduling information in the first scheduling window are the same.

When data packets corresponding to each sub-frame for transmitting data packets in the first scheduling window are different from one another, locations of a retransmitted data packet and a firstly-transmitted data packet in the first scheduling window are the same. Or in a non-coverage scenario, a predefined offset is used between the locations of the retransmitted data packet and the firstly-transmitted data packet in the first scheduling window, and the offset is determined according to at least one of a first user ID, a second user ID and an offset indicated by scheduling information.

The scheduling information includes data packet indication information and the data packet indication information is configured to indicate whether to determine a data packet type indicated by the scheduling information according to feedback information corresponding to the first UE.

The method may further include step 503, in which the second UE receives feedback information of the first UE, herein the feedback information includes all feedback information corresponding to data packets in the first scheduling window.

A sub-frame index of the feedback information is determined according to a sub-frame index for transmitting a last data packet in the first scheduling window.

A number of bits of the feedback information is determined according to a maximum number of sub-frames scheduled by the scheduling information; or
a number of bits of the feedback information is determined according to a maximum number of data packets scheduled by the scheduling information; or
a number of bits of the feedback information is determined according to a maximum number of sub-frames configured by the first scheduling window for transmitting data packets.

A location of the feedback information is determined according to ranks of locations of the data packets in the first scheduling window from front to back.

A feedback channel resource corresponding to the feedback information is determined according to scheduling information corresponding to the first scheduling window or is determined according to configuration information of a first transmission node corresponding to the first UE.

The example of the present invention further provides a computer storage medium, storing computer-executable instructions used for executing the D2D communication method applied to the second UE according to the example of the present invention.

Corresponding to the D2D communication method according to the example of the present invention, the example of the present invention further provides a D2D communication device applied to a first UE, as illustrated in FIG. 6, including a first resource location determination unit 10 and a data packet receiving unit 20.

The first resource location determination unit 10 is configured to determine a location of a resource configured in a first scheduling window for D2D communication receiving.

The data packet receiving unit 20 is configured to receive D2D communication data packets sent by a second UE on the resource of which the location is determined.

Herein, the first scheduling window includes: HARQ scheduling window, corresponding SA window in D2D communication, or joint scheduling window for multiple data packets.

A scheduling relation between scheduling windows is preset in the first scheduling window, or a scheduling relation between the scheduling windows is indicated according to signaling sent by a first transmission node covering the first UE.

The scheduling relation is determined according to at least one of the following information:
a maximum number of scheduling windows supported by the first transmission node, data packet scheduling timing, data packet feedback timing, data packet retransmission timing, scheduling window period, and time-domain locations of scheduling windows.

Data packets corresponding to each sub-frame in the first scheduling window are different from one another or one data packet in the first scheduling window is mapped to all available sub-frames in the first scheduling window.

All data packets in the first scheduling window correspond to a same piece of scheduling information, each data packet in the first scheduling window corresponds to one piece of scheduling information, or all data packets in the first scheduling window are divided into multiple data packet groups and each data packet group corresponds to one piece of scheduling information.

The scheduling information may be retransmitted in time domain in the first scheduling window.

When the first UE and/or the second UE are/is in a non-coverage scenario, frequency-domain locations of multiple data packets corresponding to one piece of scheduling information in the first scheduling window are different.

When the first UE and/or the second UE are/is in a coverage scenario, frequency-domain locations of multiple data packets corresponding to one piece of scheduling information in the first scheduling window are the same.

When data packets corresponding to each sub-frame for transmitting data packets in the first scheduling window are different from one another, locations of a retransmitted data packet and a firstly-transmitted data packet in the first scheduling window are the same. Or in a non-coverage scenario, a predefined offset is used between the locations of the retransmitted data packet and the firstly-transmitted data packet in the first scheduling window, and the offset is determined according to at least one of a first user ID, a second user ID and an offset indicated by scheduling information.

The scheduling information includes data packet indication information and the data packet indication information is configured to indicate whether to determine a data packet type indicated by the scheduling information according to feedback information corresponding to the first UE.

In one implementation mode, the device according to the example of the present invention may further include a feedback unit 30 configured to perform joint feedback on feedback information corresponding to data packets in the first scheduling window.

The feedback unit 30 is configured to determine a sub-frame index of the feedback information according to a sub-frame index for transmitting a last data packet in the first scheduling window.

Herein, a number of bits of the feedback information is determined according to a maximum number of sub-frames scheduled by the scheduling information; or
a number of bits of the feedback information is determined according to a maximum number of data packets scheduled by the scheduling information; or
a number of bits of the feedback information is determined according to a maximum number of sub-frames configured by the first scheduling window for transmitting data packets.

A location of the feedback information is determined according to ranks of locations of the data packets in the first scheduling window from front to back.

A feedback channel resource corresponding to the feedback information is determined according to scheduling information corresponding to the first scheduling window or is determined according to configuration information of a first transmission node corresponding to the first UE.

In this example, the first resource location determination unit 10 and the feedback unit 30 in the D2D communication device may be realized by a Central Processing Unit (CPU), a Digital Signal Processor (DSP) or a Field-Programmable Gate Array (FPGA) in the device in practical application. And the data packet receiving unit 20 in the device may be realized by a receiver or a receiving antenna in the device in practical application.

Corresponding to the D2D communication method according to the example of the present invention, the example of the present invention further provides a D2D communication device applied to a first transmission node, as illustrated in FIG. 7, including an information determination unit 40 and an information sending unit 50.

The information determination unit 40 is configured to determine information about a first UE to which a second UE transmits data.

The information sending unit 50 is configured to send the information about the first UE to the second UE.

The information about the first UE is carried in scheduling information sent by the first transmission node to the second UE; or the information about the first UE is determined according to a resource on which scheduling information is located.

Further, the information sending unit 50 is configured to send information to notify the first UE to be configured to receive identification information of the second UE and/or the scheduling information sent by the second UE.

In this example, the information determination unit 40 in the D2D communication device may be realized by a CPU, a DSP or an FPGA in the device in practical application. And the information sending unit 50 in the device may be realized by a transmitter or a transmitting antenna in the device in practical application.

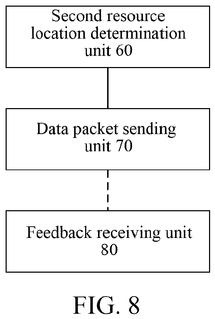

Corresponding to the D2D communication method according to the example of the present invention, the example of the present invention further provides a D2D communication device applied to a second UE, as illustrated in FIG. 8, including a second resource location determination unit 60 and a data packet sending unit 70.

The second resource location determination unit 60 is configured to determine a location of a resource configured in a first scheduling window for D2D communication.

The data packet sending unit 70 is configured to send D2D communication data packets on the resource of which the location is determined.

Herein, the first scheduling windows include: HARQ scheduling window, corresponding SA window in D2D communication, or joint scheduling window for multiple data packets.

A scheduling relation between scheduling windows is preset in the first scheduling window, or a scheduling relation between the scheduling windows is indicated according to signaling sent by a first transmission node covering the first UE.

The scheduling relation is determined according to at least one of the following information:
a maximum number of scheduling windows supported by the first transmission node, data packet scheduling timing, data packet feedback timing, data packet retransmission timing, scheduling window period, and time-domain locations of scheduling windows.

Data packets corresponding to each sub-frame in the first scheduling window are different from one another or one data packet in the first scheduling window is mapped to all available sub-frames in the first scheduling window.

All data packets in the first scheduling window correspond to a same piece of scheduling information, each data packet in the first scheduling window corresponds to one piece of scheduling information, or all data packets in the first scheduling window are divided into multiple data packet groups and each data packet group corresponds to one piece of scheduling information.

The scheduling information is retransmitted in time domain in the first scheduling window.

When the first UE and/or the second UE are/is in a non-coverage scenario, frequency-domain locations of multiple data packets corresponding to one piece of scheduling information in the first scheduling window are different.

When the first UE and/or the second UE are/is in a coverage scenario, frequency-domain locations of multiple data packets corresponding to one piece of scheduling information in the first scheduling window are the same.

When data packets corresponding to each sub-frame for transmitting data packets in the first scheduling window are different from one another, locations of a retransmitted data packet and a firstly-transmitted data packet in the first scheduling window are the same. Or in a non-coverage scenario, a predefined offset is used between the locations of the retransmitted data packet and the firstly-transmitted data packet in the first scheduling window, and the offset is determined according to at least one of a first user ID, a second user ID and an offset indicated by scheduling information.

The scheduling information includes data packet indication information and the data packet indication information is configured to indicate whether to determine a data packet type indicated by the scheduling information according to feedback information corresponding to the first UE.

The device may further include: a feedback receiving unit 80 configured to receive feedback information of the first UE, herein the feedback information includes all feedback information corresponding to data packets in the first scheduling window.

A sub-frame index of the feedback information is determined according to a sub-frame index for transmitting a last data packet in the first scheduling window.

A number of bits of the feedback information is determined according to a maximum number of sub-frames scheduled by the scheduling information; or
a number of bits of the feedback information is determined according to a maximum number of data packets scheduled by the scheduling information; or
a number of bits of the feedback information is determined according to a maximum number of sub-frames configured by the first scheduling window for transmitting data packets.

A location of the feedback information is determined according to ranks of locations of the data packets in the first scheduling window from front to back.

A feedback channel resource corresponding to the feedback information is determined according to scheduling information corresponding to the first scheduling window or is determined according to configuration information of a first transmission node corresponding to the first UE.

In this example, the second resource location determination unit 60 in the D2D communication device may be realized by a CPU, a DSP or an FPGA in the device in practical application. The data packet sending unit 70 in the device may be realized by a transmitter or a transmitting antenna in the device in practical application. The feedback receiving unit 80 in the device may be realized by a receiver or a receiving antenna in the device in practical application.

The D2D communication methods and devices will be further described below in detail in combination with specific examples.

Example 1 Description is made aiming at a base station side in a coverage scenario.

A base station determines information about a first UE to which a second UE transmits data, sends the information to the second UE and allocates resources according to a scheduling demand. Or the base station only determines that the second UE has a resource request for data transmission, does not determine an object of data transmission of the second UE and only allocates a corresponding resource to the second UE. The second UE autonomously selects the first UE to which data are transmitted, and the second UE scrambles the data sent to the first UE by using corresponding information about the first UE.

When the base station receives feedback information sent by the first UE, the base station transmits the feedback information together with scheduling information to the second UE.

Example 2 Description is made aiming at a first UE side in a coverage scenario.

A first UE performs SA detection according a resource configured by a base station and information about second UE. Or the first UE performs SA detection on the resource configured or preconfigured by the base station by using a first UE ID, and performs data receiving according to SA indication information after the matched SA indication information is detected.

When the number of the second UEs is greater than one, each second UE corresponds to one scheduling window, or all second UEs share the same resource (i.e., share one scheduling window), and the first UE performs data receiving by means of blind SA detection.

The first scheduling window includes a scheduling window supporting an HARQ function corresponding to D2D communication or a corresponding SA window in D2D communication.

The HARQ scheduling window is a scheduling window preconfigured specially for an HARQ function, and data packets are not retransmitted in the HARQ scheduling window and are only retransmitted between HARQ scheduling windows.

There may be an interval between adjacent scheduling windows and adjacent scheduling windows may also be continuous or be overlapped.

Further, there is a predetermined scheduling relation between the scheduling windows or a corresponding relation between the scheduling windows is indicated through signaling.

Further, the relation between the scheduling windows may be determined according to at least one of the following information: a maximum number of scheduling windows supported by a receiving end, data packet scheduling timing, data packet feedback timing, data packet retransmission timing, scheduling window period and time-domain locations of scheduling windows.

Supposing that there are M scheduling windows at most, a preset relation between scheduling windows is as follows.

Data packets can only be transmitted in scheduling windows corresponding to a same virtual scheduling window index. For example, supposing that there are six continuous scheduling windows in time domain, a retransmission scheduling window of a first scheduling window is a fourth scheduling window, a retransmission scheduling window of a second scheduling window is a fifth scheduling window and a retransmission scheduling window of a third scheduling window is a sixth scheduling window. Or, by adjacent scheduling windows, a retransmission scheduling window of a current scheduling window is a next scheduling window, at this moment, a time limitation of feedback sending and receiving needs to be satisfied between a subframe for sending the last data packet in the first scheduling window and a subframe for sending SA in the second scheduling window. Or scheduling windows within a scheduling window configuration period are numbered according to serial numbers of radio frames, and supposing that k is a current scheduling window index, a virtual scheduling window corresponding to this scheduling window is k mod M. Or supposing that M scheduling windows are supported at most, a scheduling window corresponding to a current scheduling window is indicated with X bits, for example, if two scheduling windows are supported at most, a virtual scheduling window index corresponding to a current scheduling window is indicated with 1 bit, and it can indicate that data packets in which previous scheduling window are retransmitted in the current scheduling window.

Further, the transmission of the data packets in the first scheduling window includes the following situation: data packets corresponding to each sub-frame for transmitting the data packets in the first scheduling window are different from one another, or the data packets are mapped to each sub-frame configured for transmitting the data packets in the SA window.

For example, each sub-frame in the scheduling window corresponds to one data packet, the data packets corresponding to different sub-frames are different, it is supposed that there are four sub-frames in the scheduling window for transmitting data packets and the four sub-frames respectively correspond to data packets. Or one data packet is mapped to all available sub-frames in the scheduling window, it is supposed that that there are two sub-frames for transmitting data packets in the scheduling window, one data packet may be transmitted on the two sub-frames by means of repeating, or may be transmitted with different versions of a same data packet.

Further, all data packets in the first scheduling window correspond to a same piece of scheduling information, each data packet in the SA window corresponds to one piece of scheduling information. Or all data packets in the first scheduling window are divided into multiple data packet groups and each data packet group corresponds to one piece of scheduling information.

For example, if k data packets are transmitted in one scheduling window, each data packet corresponds to one piece of scheduling information. Or k data packets correspond to the same scheduling information and have the same frequency-domain bandwidth and MCS. Or data packets in an SA scheduling window are divided into two data packet groups, each data packet group is independently configured with transmission MCS and data packets in each data packet group have the same MCS. Different data packets may be located in the same frequency domain and may also be located in different frequency domains.

The first UE detects the scheduling information according to a pre-agreed scheduling information transmission mode, and performs data receiving according to the scheduling information.

Further, when data packets corresponding to each sub-frame for transmitting the data packets in the first scheduling window are different from one another, locations of a retransmitted data packet and a firstly-transmitted data packet in the first scheduling window are the same.

Further more, the scheduling information corresponding to the data packets includes data packet indication information and the data packet indication information is configured to indicate whether to determine a data packet type according to latest feedback information of the first UE.

For example, the number of sub-frames for transmitting data packets in the first scheduling window is two, and after the first UE receives data on the two sub-frames, feedback information ACK and NACK are respectively generated. If the second UE receives the feedback information of the first UE, the first UE sets data packet indication information corresponding to the corresponding retransmission scheduling window as that the type of the data packet is determined according to the latest feedback information of the first UE. If the data packets are scheduled still on the sub-frames in the scheduling window or the number of sub-frames scheduled in the scheduling window is still two, data packets corresponding to the sub-frames are a new data packet and a retransmitted data packet. If the second UE does not receive the feedback information of the first UE, the first UE sets data packet indication information corresponding to the corresponding retransmission scheduling window as that the type of the data packet is not determined according to the last feedback information of the first UE, and at this moment, the first UE needs to determine the type of each data packet according to the scheduling information corresponding to the scheduling window. For example, whether to retransmit data packet information is independently configured for each data packet, or the data packets in the scheduling window are defaulted to be new data packets.

In the above-mentioned example, 1 bit is used. More than 1 bit, such as 2 bits, may also be used. In addition to the above-mentioned two states, two states that data packets are in the same state as the data packets in a previous corresponding scheduling window and all data packets are retransmitted packets, are further added, or one of two states that data packets are in the same state as the data packets in a previous corresponding scheduling window and all data packets are retransmitted packets, is further added.

Further more, sub-frames for transmitting data in the scheduling window are determined according to the data packet indication information, including that: when the data packet indication information indicates to acknowledge data packet information according to feedback information of the first UE, sub-frame locations indicated by scheduling information corresponding to the scheduling window are transmission locations of the new data packets, and sub-frame locations corresponding to retransmitted data packets are the same as the transmission locations of the data packets corresponding to the feedback information in the scheduling window.

Herein, retransmission frequency domains may be the same and may also be different.

Example 3 Description is made aiming at a second UE side in a coverage scenario.

The second UE performs data transmission according to a resource configured by a base station and information about first UE. The second UE performs data transmission according to feedback information and/or a service demand of the first UE based on first scheduling window, and the second UE performs data retransmission between the scheduling windows.

The first scheduling window specifically includes a scheduling window supporting an HARQ function corresponding to D2D communication or a corresponding SA window in D2D communication.

The scheduling window supporting an HARQ function corresponding to D2D communication is a scheduling window preconfigured specially for an HARQ function, and data packets are not retransmitted in the scheduling window and are only retransmitted between the scheduling windows.

Further, there may be an interval between adjacent scheduling windows and adjacent scheduling windows may also be continuous.

Further, there is a predetermined scheduling relation between the scheduling windows or a corresponding relation between the scheduling windows is indicated through signaling.

The relation between the scheduling windows may be determined according to at least one of the following information: a maximum number of scheduling windows supported by a receiving end, data packet scheduling timing, data packet feedback timing, data packet retransmission timing, scheduling window period and time-domain locations of scheduling windows.

Supposing that there are M scheduling windows at most, a preset relation between scheduling windows is as follows.

Data packets can only be transmitted in scheduling windows corresponding to a same virtual scheduling window index. For example, supposing that there are six continuous scheduling windows in time domain, a retransmission scheduling window of a first scheduling window is a fourth scheduling window, a retransmission scheduling window of a second scheduling window is a fifth scheduling window and a retransmission scheduling window of a third scheduling window is a sixth scheduling window. Or, by adjacent scheduling windows, a retransmission scheduling window of a current scheduling window is a next scheduling window, at this moment, a time limitation of feedback sending and receiving needs to be satisfied between a subframe for sending the last data packet in the first scheduling window and a subframe for sending SA in the second scheduling window. Or scheduling windows within a scheduling window configuration period are numbered according to serial numbers of radio frames, and supposing that k is a current scheduling window index, a virtual scheduling window corresponding to this scheduling window is k mod M. Or supposing that M scheduling windows are supported at most, a scheduling window corresponding to a current scheduling window is indicated with X bits, for example, if two scheduling windows are supported at most, a virtual scheduling window index corresponding to a current scheduling window is indicated with 1 bit, and it can indicate that data packets in which previous scheduling window are retransmitted in the current scheduling window.

Further, the transmission of the data packets in the first scheduling window includes the following situation: data packets corresponding to each sub-frame for transmitting the data packets in the first scheduling window are different from one another, or the data packets are mapped to each sub-frame configured for transmitting the data packets in the SA window.

For example, each sub-frame in the scheduling window corresponds to one data packet, the data packets corresponding to different sub-frames are different, it is supposed that there are four sub-frames in the scheduling window for transmitting data packets and the four sub-frames respectively correspond to data packets. Or one data packet is mapped to all available sub-frames in the scheduling window, it is supposed that that there are two sub-frames for transmitting data packets in the scheduling window, one data packet may be transmitted on the two sub-frames by means of repeating, or may be transmitted with different versions of a same data packet.

Further, all data packets in the first scheduling window correspond to a same piece of scheduling information, each data packet in the SA window corresponds to one piece of scheduling information. Or all data packets in the first scheduling window are divided into multiple data packet groups and each data packet group corresponds to one piece of scheduling information.

For example, if k data packets are transmitted in one scheduling window, each data packet corresponds to one piece of scheduling information. Or k data packets correspond to the same scheduling information and have the same frequency-domain bandwidth and MCS. Or data packets in an SA scheduling window are divided into two data packet groups, each data packet group is independently configured with transmission MCS and data packets in each data packet group have the same MCS. Different data packets may be located in the same frequency domain and may also be located in different frequency domains.

Further, the scheduling information may be retransmitted in time domain in the scheduling window.

Further, when data packets corresponding to each sub-frame for transmitting the data packets in the first scheduling window are different from one another, locations of a retransmitted data packet and a firstly-transmitted data packet in the first scheduling window are the same.

Further more, the scheduling information corresponding to the data packets includes data packet indication information and the data packet indication information is configured to indicate whether to determine a data packet type according to latest feedback information of the first UE.

For example, the number of sub-frames for transmitting data packets in the first scheduling window is two, and after the first UE receives data on the two sub-frames, feedback information ACK and NACK are respectively generated. If the second UE receives the feedback information of the first UE, the first UE sets data packet indication information corresponding to the corresponding retransmission scheduling window as that the type of the data packet is determined according to the latest feedback information of the first UE. If the data packets are scheduled still on the sub-frames in the scheduling window or the number of sub-frames scheduled in the scheduling window is still two, data packets corresponding to the sub-frames are a new data packet and a retransmitted data packet. If the second UE does not receive the feedback information of the first UE, the first UE sets data packet indication information corresponding to the corresponding retransmission scheduling window as that the type of the data packet is not determined according to the latest feedback information of the first UE, and at this moment, the first UE needs to determine the type of each data packet according to the scheduling information corresponding to the scheduling window. For example, whether to retransmit data packet information is independently configured for each data packet, or the data packets in the scheduling window are defaulted to be new data packets.

In the above-mentioned example, 1 bit is used. More than 1 bit, such as 2 bits, may also be used. In addition to the above-mentioned two states, two states that data packets are in the same state as the data packets in a previous corresponding scheduling window and all data packets are retransmitted packets, are further added, or one of two states that data packets are in the same state as the data packets in a previous corresponding scheduling window and all data packets are retransmitted packets, is further added.

Further more, sub-frames for transmitting data in the scheduling window are determined according to the data packet indication information, including that: when the data packet indication information indicates to acknowledge data packet information according to feedback information of the first UE, sub-frame locations indicated by scheduling information corresponding to the scheduling window are transmission locations of the new data packets, and sub-frame locations corresponding to retransmitted data packets are the same as the transmission locations of the data packets corresponding to the feedback information in the scheduling window.

Herein, retransmission frequency domains may be the same and may also be different.

Example 4 Description is made aiming at a first UE side in a non-coverage scenario.

A first UE performs SA detection according to a preconfigured resource and information about second UE. Or the first UE performs detection on the preconfigured resource by using a first UE ID, and performs data receiving according to SA indication information after the matched SA indication information is detected.

When the number of the second UEs is greater than one, each second UE corresponds to one specific scheduling window resource, or all second UEs share the same resource, and the first UE performs data receiving by means of blind SA detection.

The first scheduling window includes a scheduling window supporting an HARQ function corresponding to D2D communication, a corresponding SA window in D2D communication, or a joint scheduling window for multiple data packets.

The scheduling window supporting an HARQ function corresponding to D2D communication is a scheduling window preconfigured specially for an HARQ function, and data packets are not retransmitted in the scheduling window and are only retransmitted between the scheduling windows.

Further, there may be an interval between adjacent scheduling windows and adjacent scheduling windows may also be continuous or be overlapped.

Further, there is a predetermined scheduling relation between the scheduling windows or a corresponding relation between the scheduling windows is indicated through signaling.

Further, the relation between the scheduling windows may be determined according to at least one of the following information: a maximum number of scheduling windows supported by a receiving end, data packet scheduling timing, data packet feedback timing, data packet retransmission timing, scheduling window period and time-domain locations of scheduling windows.

Supposing that there are M scheduling windows at most, a preset relation between scheduling windows is as follows.

Data packets can only be transmitted in scheduling windows corresponding to a same virtual scheduling window index. For example, supposing that there are six continuous scheduling windows in time domain, a retransmission scheduling window of a first scheduling window is a fourth scheduling window, a retransmission scheduling window of a second scheduling window is a fifth scheduling window and a retransmission scheduling window of a third scheduling window is a sixth scheduling window. Or, by adjacent scheduling windows, a retransmission scheduling window of a current scheduling window is a next scheduling window, at this moment, a time limitation of feedback sending and receiving needs to be satisfied between a subframe for sending the last data packet in the first scheduling window and a subframe for sending SA in the second scheduling window. Or scheduling windows within a scheduling window configuration period are numbered according to serial numbers of radio frames, and supposing that k is a current scheduling window index, a virtual scheduling window corresponding to this scheduling window is k mod M. Or supposing that M scheduling windows are supported at most, a scheduling window corresponding to a current scheduling window is indicated with X bits, for example, if two scheduling windows are supported at most, a virtual scheduling window index corresponding to a current scheduling window is indicated with 1 bit, and it can indicate that data packets in which previous scheduling are retransmitted in the current scheduling window.

Further, the transmission of the data packets in the first scheduling window includes the following situation: data packets corresponding to each sub-frame for transmitting the data packets in the first scheduling window are different from one another, or the data packets are mapped to each sub-frame configured for transmitting the data packets in the SA window.

For example, each sub-frame in the scheduling window corresponds to one data packet, the data packets corresponding to different sub-frames are different, it is supposed that there are four sub-frames in the scheduling window for transmitting data packets and the four sub-frames respectively correspond to data packets. Or one data packet is mapped to all available sub-frames in the scheduling window, it is supposed that that there are two sub-frames for transmitting data packets in the scheduling window, one data packet may be transmitted on the two sub-frames by means of repeating, or may be transmitted with different versions of a same data packet.

Further, all data packets in the first scheduling window correspond to a same piece of scheduling information, each data packet in the SA window corresponds to one piece of scheduling information. Or all data packets in the first scheduling window are divided into multiple data packet groups and each data packet group corresponds to one piece of scheduling information.

For example, if k data packets are transmitted in one scheduling window, each data packet corresponds to one piece of scheduling information. Or k data packets correspond to the same scheduling information and have the same frequency-domain bandwidth and MCS. Or data packets in an SA scheduling window are divided into two data packet groups, each data packet group is independently configured with transmission MCS and data packets in each data packet group have the same MCS. Different data packets may be located in the same frequency domain and may also be located in different frequency domains.

In addition, one implementation mode is as follows: frequency-domain locations of multiple data packets corresponding to one piece of scheduling information in the first scheduling window are different; the frequency-domain locations are determined according to a pre-agreed mode. The pre-agreed mode includes that a frequency-domain location corresponding to each data packet is randomly generated according to at least one of the first UE ID, the second UE ID and an offset parameter indicated by the scheduling information. For example, a frequency-domain location of a first data packet is determined according to the scheduling information, and for other locations, corresponding offsets are respectively generated according to the agreed mode and the frequency-domain location of the first data packet is determined according to the initial location of the first data packet and the corresponding offset.

The first UE detects the scheduling information according to a pre-agreed scheduling information transmission mode, and performs data receiving according to the scheduling information.

Further, when data packets corresponding to each sub-frame for transmitting the data packets in the first scheduling window are different from one another, locations of a retransmitted data packet and a firstly-transmitted data packet in the first scheduling window are the same. Or a predefined offset is used between the locations of the retransmitted data packet and the firstly-transmitted data packet in the first scheduling window, and the offset is determined according to at least one of the first user ID, the second user ID and an offset parameter indicated by the scheduling information.

Further more, the scheduling information corresponding to the data packets includes data packet indication information and the data packet indication information is configured to indicate whether to determine a data packet type according to the latest feedback information of the first UE.

For example, the number of sub-frames for transmitting data packets in the first scheduling window is two, and after the first UE receives data on the two sub-frames, feedback information ACK and NACK are respectively generated. If the second UE receives the feedback information of the first UE, the first UE sets data packet indication information corresponding to the corresponding retransmission scheduling window as that the type of the data packet is determined according to the latest feedback information of the first UE. If the data packets are scheduled still on the sub-frames in the scheduling window or the number of sub-frames scheduled in the scheduling window is still two, data packets corresponding to the sub-frames are a new data packet and a retransmitted data packet. If the second UE does not receive the feedback information of the first UE, the first UE sets data packet indication information corresponding to the corresponding retransmission scheduling window as that the type of the data packet is not determined according to the last feedback information of the first UE, and at this moment, the first UE needs to determine the type of each data packet according to the scheduling information corresponding to the scheduling window. For example, whether to retransmit data packet information is independently configured for each data packet, or the data packets in the scheduling window are defaulted to be new data packets.

In the above-mentioned example, 1 bit is used. More than 1 bit, such as 2 bits, may also be used. In addition to the above-mentioned two states, two states that data packets are in the same state as the data packets in a previous corresponding scheduling window and all data packets are retransmitted packets, are further added, or one of two states that data packets are in the same state as the data packets in a previous corresponding scheduling window and all data packets are retransmitted packets, is further added.

Further more, sub-frames for transmitting data in the scheduling window are determined according to the data packet indication information, including that: when the data packet indication information indicates to acknowledge data packet information according to feedback information of the first UE, sub-frame locations indicated by scheduling information corresponding to the scheduling window are transmission locations of the new data packets, and sub-frame locations corresponding to retransmitted data packets are the same as the transmission locations of the data packets corresponding to the feedback information in the scheduling window.

Herein, retransmission frequency domains may be the same and may also be different.

Example 5 Description is made aiming at a second UE side in a non-coverage scenario.

The second UE performs data transmission according to feedback information and/or a service demand of the first UE based on the first scheduling window, and the second UE performs data retransmission between the scheduling windows.

When the number of the first UEs is greater than one, each second UE corresponds to one specific scheduling window, or all first UEs share the same resource.

The data of the first UE are scrambled by using a corresponding ID.

The first scheduling window specifically includes a scheduling window supporting an HARQ function corresponding to D2D communication or a corresponding SA window in D2D communication.

The scheduling window supporting an HARQ function corresponding to D2D communication is a scheduling window preconfigured specially for an HARQ function, and data packets are not retransmitted in the scheduling window and are only retransmitted between the scheduling windows.

Further, there may be an interval between adjacent scheduling windows and adjacent scheduling windows may also be continuous or be overlapped.

Further, there is a predetermined scheduling relation between the scheduling windows or a corresponding relation between the scheduling windows is indicated through signaling.

Further, the relation between the scheduling windows may be determined according to at least one of the following information: a maximum number of scheduling windows supported by a receiving end, data packet scheduling timing, data packet feedback timing, data packet retransmission timing, scheduling window period and time-domain locations of scheduling windows.

Supposing that there are M scheduling windows at most, a preset relation between scheduling windows is as follows.

Data packets can only be transmitted in scheduling windows corresponding to the same virtual scheduling window index. For example, supposing that there are six continuous scheduling windows in time domain, a retransmission scheduling window of a first scheduling window is a fourth scheduling window, a retransmission scheduling window of a second scheduling window is a fifth scheduling window and a retransmission scheduling window of a third scheduling window is a sixth scheduling window. Or by adjacent scheduling windows, a retransmission scheduling window of a current scheduling window is a next scheduling window, at this moment, a time limitation of feedback sending and receiving needs to be satisfied between a subframe for sending the last data packet in the first scheduling window and a subframe for sending SA in the second scheduling window. Or scheduling windows within a scheduling window configuration period are numbered according to serial numbers of radio frames, and supposing that k is a current scheduling window index, a virtual scheduling window corresponding to this scheduling window is k mod M. Or supposing that M scheduling windows are supported at most, a scheduling window corresponding to a current scheduling window is indicated with X bits, for example, if two scheduling windows are supported at most, a virtual scheduling window index corresponding to a current scheduling window is indicated with 1 bit, and it can indicate that data packets in which previous scheduling window are retransmitted in the current scheduling window.

Further, the transmission of the data packets in the first scheduling window includes the following situation: data packets corresponding to each sub-frame for transmitting the data packets in the first scheduling window are different from one another, or the data packets are mapped to each sub-frame configured for transmitting the data packets in the SA window.

For example, each sub-frame in the scheduling window corresponds to one data packet, the data packets corresponding to different sub-frames are different, it is supposed that there are four sub-frames in the scheduling window for transmitting data packets and the four sub-frames respectively correspond to data packets. Or one data packet is mapped to all available sub-frames in the scheduling window, it is supposed that that there are two sub-frames for transmitting data packets in the scheduling window, one data packet may be transmitted on the two sub-frames by means of repeating, or may be transmitted with different versions of a same data packet.

Further, all data packets in the first scheduling window correspond to a same piece of scheduling information, each data packet in the SA window corresponds to one piece of scheduling information. Or all data packets in the first scheduling window are divided into multiple data packet groups and each data packet group corresponds to one piece of scheduling information.

For example, if k data packets are transmitted in one scheduling window, each data packet corresponds to one piece of scheduling information. Or k data packets correspond to the same scheduling information and have the same frequency-domain bandwidth and MCS. Or data packets in an SA scheduling window are divided into two data packet groups, each data packet group is independently configured with a transmission MCS and data packets in each data packet group have the same MCS. Different data packets may be located in the same frequency domain and may also be located in different frequency domains.

In addition, one implementation mode is as follows: frequency-domain locations of multiple data packets corresponding to one piece of scheduling information in the first scheduling window are different; the frequency-domain locations are determined according to a pre-agreed mode. The pre-agreed mode includes that a frequency-domain location corresponding to each data packet is randomly generated according to at least one of the first UE ID, the second UE ID and an offset parameter indicated by the scheduling information. For example, a frequency-domain location of a first data packet is determined according to the scheduling information, and for other locations, corresponding offsets are respectively generated according to the agreed mode and the frequency-domain location of the first data packet is determined according to the initial location of the first data packet and the corresponding offset.

The second UE transmits the scheduling information and the corresponding data packets according to a pre-agreed scheduling information transmission mode.

Further, when data packets corresponding to each sub-frame for transmitting the data packets in the first scheduling window are different from one another, locations of a retransmitted data packet and a firstly-transmitted data packet in the first scheduling windows are the same. Or a predefined offset is used between the locations of the retransmitted data packet and the firstly-transmitted data packet in the first scheduling window, and the offset is determined according to at least one of the first user ID, the second user ID and an offset parameter indicated by the scheduling information.

Further more, the scheduling information corresponding to the data packets includes data packet indication information and the data packet indication information is configured to indicate whether to determine a data packet type according to the latest feedback information of the first UE.

For example, the number of sub-frames for transmitting data packets in the first scheduling window is two, and after the first UE receives data on the two sub-frames, feedback information ACK and NACK are respectively generated. If the second UE receives the feedback information of the first UE, the first UE sets data packet indication information corresponding to the corresponding retransmission scheduling window as that the type of the data packet is determined according to the latest feedback information of the first UE. If the data packets are scheduled still on the sub-frames in the scheduling window or the number of sub-frames scheduled in the scheduling window is still two, data packets corresponding to the sub-frames are a new data packet and a retransmitted data packet. If the second UE does not receive the feedback information of the first UE, the first UE sets data packet indication information corresponding to the corresponding retransmission scheduling window as that the type of the data packet is not determined according to the last feedback information of the first UE, and at this moment, the first UE needs to determine the type of each data packet according to the scheduling information corresponding to the scheduling window. For example, whether to retransmit data packet information is independently configured for each data packet, or the data packets in the scheduling window are defaulted to be new data packets.

In the above-mentioned example, 1 bit is used. More than 1 bit, such as 2 bits, may also be used. In addition to the above-mentioned two states, two states that data packets are in the same state as the data packets in a previous corresponding scheduling window and all data packets are retransmitted packets, are further added, or one of two states that data packets are in the same state as the data packets in a previous corresponding scheduling window and all data packets are retransmitted packets, is further added.

Further more, sub-frames for transmitting data in the scheduling window are determined according to the data packet indication information, including that: when the data packet indication information indicates to acknowledge data packet information according to feedback information of the first UE, sub-frame locations indicated by scheduling information corresponding to the scheduling window are transmission locations of the new data packets, and sub-frame locations corresponding to retransmitted data packets are the same as the transmission locations of the data packets corresponding to the feedback information in the scheduling window.

Herein, retransmission frequency domains may be the same and may also be different.

It needs to be noted that the above-mentioned D2D communication is not limited to communication between terminals, and may also be applied to various communication scenarios such as communication between base stations, communication between a base station and a terminal, communication between a base station and a relay and communication between a relay and a terminal, and the UE may be a transmission node such as a base station or a relay.

One skilled in the art shall understand that the examples of the present invention may be provided as methods, systems or computer program products. Therefore, the present invention may adopt the form of hardware examples, software examples or examples combining software and hardware. In addition, the present invention may adopt the form of computer program products which are implemented on one or more computer-usable storage mediums (including but not limited to magnetic disk memories, optical memories and the like) containing computer-usable program codes.

The present invention is described according to flowcharts and/or block diagrams of the methods, apparatuses (systems) and computer program products according to the examples of the present invention. It shall be understood that each flow and/or block in the flowcharts and/or block diagrams and combinations of flows and/or blocks in the flowcharts and/or block diagrams may be implemented by computer program instructions. These computer program instructions may be provided to a general-purpose computer, a dedicated computer, an embedded processor or other programmable data processing devices to produce a machine, such that instructions executed through a processor of a computer or other programmable data processing device produce an apparatus which is used for implementing functions specified in one or more flows of flowcharts and/or one or more blocks of block diagrams.

These computer program instructions may also be stored in a computer-readable memory which is capable of guiding computers or other programmable data processing devices to work in a specific manner, such that instructions stored in the computer-readable memory produce a product including an instruction device which implements functions specified in one or more flows of flowcharts and/or one or more blocks of block diagrams.

Theses computer program instructions may also be loaded onto computers or other programmable data processing devices, such that a series of operation steps are executed on computers or other programmable data processing devices to generate processing implemented by computers. Thereby instructions executed on computers or other programmable data processing devices provide steps which are used for implementing functions specified in one or more flows of flowcharts and/or one or more blocks of block diagrams.

The above-mentioned examples are just preferred examples of the present invention and are not used for limiting the protection scope of the present invention.

### Industrial Applicability

The examples of the present invention solve the problem of HARQ transmission based on scheduling windows during D2D communication, and without remarkably increasing terminal realization complexity and signaling overhead, the examples of the present invention realize D2D unicast communication.

## Claims

1. A Device to Device, D2D, communication method, applied to a first user equipment, UE, comprising the steps of:
the first UE determining a location of a resource configured in a first scheduling window for D2D communication data reception (301); and
the first UE receiving D2D communication data packets sent by a second UE on the resource of which the location is determined (302),
wherein the first scheduling window refers to: Hybrid Automatic Repeat reQuest, HARQ, scheduling window, corresponding scheduled resource allocation, SA, window in D2D communication, or joint scheduling window for a plurality of data packets;
**characterized by** using, in a non-coverage scenario, a predefined offset between the location of the retransmitted data packet in a retransmission scheduling window corresponding to current first scheduling window and the location of the firstly-transmitted data packet in the first scheduling window, and the predefined offset is determined according to at least one of a first user ID of the first UE, a second user ID of the second UE and an offset indicated by scheduling information.

2. The D2D communication method according to claim 1, wherein a scheduling relation between scheduling windows is preset in the first scheduling window, or a scheduling relation between the scheduling windows is indicated according to signaling sent by a first transmission node covering the first UE,
wherein the scheduling relation is determined according to at least one of the following information:
a maximum number of scheduling windows supported by the first transmission node, data packet scheduling timing, data packet feedback timing, data packet retransmission timing, scheduling window period, and time-domain locations of scheduling windows.

3. The D2D communication method according to claim 1, wherein,
all data packets in the first scheduling window correspond to a same piece of scheduling information, each data packet in the first scheduling window corresponds to one piece of scheduling information, or all data packets in the first scheduling window are divided into a plurality of data packet groups and each data packet group corresponds to one piece of scheduling information;
the scheduling information comprises data packet indication information, and the data packet indication information is configured to indicate whether to determine a data packet type indicated by the scheduling information according to feedback information sent by the first UE; wherein the data packet type comprises a new data packet and a retransmitted data packet.

4. The D2D communication method according to claim 3, wherein,
when the first UE and/or the second UE are/is in a non-coverage scenario, frequency-domain locations of a plurality of data packets corresponding to one piece of scheduling information in the first scheduling window are different.

5. The D2D communication method according to claim 1, wherein the method further comprises:
the first UE feeding back overall feedback information corresponding to data packets in the first scheduling window (303).

6. The D2D communication method according to claim 5, wherein a sub-frame index of the feedback information is determined according to a sub-frame index for transmitting a last data packet in the first scheduling window.

7. The D2D communication method according to claim 5, wherein,
a number of bits of the feedback information is determined according to a maximum number of sub-frames scheduled by the scheduling information; or
a number of bits of the feedback information is determined according to a maximum number of data packets scheduled by the scheduling information; or
a number of bits of the feedback information is determined according to a maximum number of sub-frames configured by the first scheduling window for transmitting data packets.

8. The D2D communication method according to claim 5, wherein a location of the feedback information is determined according to ranks of locations of the data packets in the first scheduling window from front to back.

9. The D2D communication method according to claim 5, wherein a feedback channel resource corresponding to the feedback information is determined according to scheduling information corresponding to the first scheduling window or is determined according to configuration information of a first transmission node corresponding to the first UE.

10. A Device to Device, D2D, communication method, applied to a second user equipment, UE, comprising the steps of:
the second UE determining a location of a resource configured in a first scheduling window for D2D communication (501); and
the second UE sending D2D communication data packets on the resource of which the location is determined (502),
wherein the first scheduling window refers to: Hybrid Automatic Repeat reQuest, HARQ, scheduling window, corresponding scheduled resource allocation, SA, window in D2D communication, or joint scheduling window for a plurality of data packets;
**characterized by** using, in a non-coverage scenario, a predefined offset between the location of the retransmitted data packet in a retransmission scheduling window corresponding to current first scheduling window and the location of the firstly-transmitted data packet in the first scheduling window, and the predefined offset is determined according to at least one of a first user ID of the first UE, a second user ID of the second UE and an offset indicated by scheduling information.

## Patentansprüche

1. Vorrichtung-zu-Vorrichtung(D2D)-Kommunikationsverfahren, das auf ein erstes Benutzergerät, UE, angewendet wird, umfassend die folgenden Schritte:
Bestimmen einer Position einer Ressource, die in einem ersten Planungsfenster für D2D-Kommunikationsdatenempfang konfiguriert ist, durch das erste UE (301); und
Empfangen von D2D-Kommunikationsdatenpaketen, die durch ein zweites UE gesendet werden, an der Ressource, von welcher die Position bestimmt wird, durch das erste UE (302),
wobei sich das erste Planungsfenster auf Folgendes bezieht:
Hybrid-Automatic-Repeat-reQuest(HARQ)-Planungsfenster, das einem Fenster für geplante Ressourcenzuteilung (SA) in D2D-Kommunikation oder einem gemeinsamen Planungsfenster für eine Vielzahl von Datenpaketen entspricht;
**gekennzeichnet durch** Verwendung eines vordefinierten Versatzes zwischen der Position des erneut übertragenen Datenpakts in einem Planungsfenster für erneute Übertragung, das dem aktuell ersten Planungsfenster entspricht, und der Position des zunächst übertragenen Datenpakets in dem ersten Planungsfenster in einem nicht vollständigen Szenario, und wobei der vordefinierte Versatz gemäß mindestens einem von einer ersten Benutzer-ID des ersten UE, einer zweiten Benutzer-ID des zweiten UE und einem durch Planungsinformationen angegebenen Versatz bestimmt wird.

2. D2D-Kommunikationsverfahren nach Anspruch 1, wobei ein Planungsverhältnis zwischen Planungsfenstern in dem ersten Planungsfenster voreingestellt ist oder ein Planungsverhältnis zwischen den Planungsfenstern gemäß Signalen, die durch einen ersten Übertragungsknoten, der das erste UE abdeckt, gesendet werden, angegeben wird,
wobei das Planungsverhältnis gemäß mindestens einer der folgenden Informationen bestimmt wird:
eine maximale Anzahl von Planungsfenstern, die durch den ersten Übertragungsknoten, Datenpaketplanungs-Timing, Datenpaket-Rückkopplungs-Timing, Timing für die erneute Übertragung von Datenpaketen, Planungsfensterzeitraum und Zeit-Domänenpositionen von Planungsfenstern unterstützt werden.

3. D2D-Kommunikationsverfahren nach Anspruch 1, wobei:
alle Datenpakete in dem ersten Planungsfenster einer gleichen Planungsinformation entsprechen, jedes Datenpaket in dem ersten Planungsfenster einer Planungsinformation entspricht oder alle Datenpakete in dem ersten Planungsfenster in eine Vielzahl von Datenpaketgruppen unterteilt sind und jede Datenpaketgruppe einer Planungsinformation entspricht;
die Planungsinformationen Datenpaketanzeigeinformationen umfassen, und die Datenpaketanzeigeinformationen dazu konfiguriert sind, anzuzeigen, ob ein Datenpakettyp, der durch die Planungsinformationen gemäß Rückkopplungsinformationen, die durch das erste UE gesendet werden, angezeigt wird, bestimmt werden soll; wobei der Datenpakettyp ein neues Datenpaket und ein erneut übertragenes Datenpaket umfasst.

4. D2D-Kommunikationsverfahren nach Anspruch 3, wobei:
sich Frequenz-Domänenpositionen von einer Vielzahl von Datenpaketen, die einer Planungsinformation in dem ersten Planungsfenster entsprechen, unterscheiden, wenn sich das erste UE und/oder das zweite UE in einem nicht vollständigen Szenario befindet/befinden.

5. D2D-Kommunikationsverfahren nach Anspruch 1, wobei das Verfahren ferner Folgendes umfasst:
Rückkoppeln allgemeiner Rückkopplungsinformationen, die Datenpaketen in dem ersten Planungsfenster entsprechen, durch das erste UE (303).

6. D2D-Kommunikationsverfahren nach Anspruch 5, wobei ein Unterrahmen-Index der Rückkopplungsinformationen gemäß einem Unterrahmen-Index zum Übertragen eines letzten Datenpakets in dem ersten Planungsfenster bestimmt wird.

7. D2D-Kommunikationsverfahren nach Anspruch 5, wobei:
eine Anzahl von Bits der Rückkopplungsinformationen gemäß einer maximalen Anzahl von Unterrahmen, die durch die Planungsinformationen eingeplant sind, bestimmt werden; oder
eine Anzahl von Bits der Rückkopplungsinformationen gemäß einer maximalen Anzahl von Datenpaketen, die durch die Planungsinformationen eingeplant sind, bestimmt werden; oder
eine Anzahl von Bits der Rückkopplungsinformationen gemäß einer maximalen Anzahl von Unterrahmen, die durch das erste Planungsfenster zur Übertragung von Datenpaketen konfiguriert sind, bestimmt werden.

8. D2D-Kommunikationsverfahren nach Anspruch 5, wobei eine Position der Rückkopplungsinformationen gemäß Positionsrängen der Datenpakete in dem ersten Planungsfenster von vorne nach hinten bestimmt wird.

9. D2D-Kommunikationsverfahren nach Anspruch 5, wobei eine Rückkopplungskanalressource, die den Rückkopplungsinformationen entspricht, gemäß Planungsinformationen, die dem ersten Planungsfenster entsprechen, bestimmt wird oder gemäß Konfigurationsinformationen eines ersten Übertragungsknotens, der dem ersten UE entspricht, bestimmt wird.

10. Vorrichtung-zu-Vorrichtung(D2D)-Kommunikationsverfahren, das auf ein zweites Benutzergerät, UE, angewendet wird, umfassend die folgenden Schritte:
Bestimmen einer Position einer Ressource, die in einem ersten Planungsfenster für D2D-Kommunikation konfiguriert ist, durch das zweite UE (501); und
Senden von D2D-Kommunikationsdatenpaketen an der Ressource, von welcher die Position bestimmt wird, durch das zweite UE (502), wobei sich das erste Planungsfenster auf Folgendes bezieht:
Hybrid-Automatic-Repeat-reQuest(HARQ)-Planungsfenster, das einem Fenster für geplante Ressourcenzuteilung (SA) in D2D-Kommunikation oder einem gemeinsamen Planungsfenster für eine Vielzahl von Datenpaketen entspricht;
**gekennzeichnet durch** Verwendung eines vordefinierten Versatzes zwischen der Position des erneut übertragenen Datenpakts in einem Planungsfenster für erneute Übertragung, das dem aktuell ersten Planungsfenster entspricht, und der Position des zunächst übertragenen Datenpakets in dem ersten Planungsfenster in einem nicht vollständigen Szenario, und wobei der vordefinierte Versatz gemäß mindestens einem von einer ersten Benutzer-ID des ersten UE, einer zweiten Benutzer-ID des zweiten UE und einem durch Planungsinformationen angegebenen Versatz bestimmt wird.

## Revendications

1. Procédé de communication de dispositif à dispositif, D2D, appliqué à un premier équipement utilisateur, UE, comprenant les étapes suivantes :
la détermination par le premier UE d'un emplacement d'une ressource configurée dans une première fenêtre de planification pour une réception de données de communication D2D (301) ; et
la réception par le premier UE de paquets de données de communication D2D envoyés par un second UE sur la ressource dont l'emplacement est déterminé (302),
dans lequel la première fenêtre de planification se réfère à :
une fenêtre de planification de demande de répétition automatique hybride, HARQ, une fenêtre d'allocation de ressource planifiée, SA, correspondante dans une communication D2D, ou une fenêtre de planification conjointe pour une pluralité de paquets de données ;
**caractérisé par** l'utilisation, dans un scénario de non couverture, d'un décalage prédéfini entre l'emplacement du paquet de données retransmis dans une fenêtre de planification de retransmission correspondant à une première fenêtre de planification actuelle et l'emplacement du paquet de données transmis en premier lieu dans la première fenêtre de planification, et le décalage prédéfini est déterminé en fonction d'au moins un parmi un premier ID d'utilisateur du premier UE, un second ID d'utilisateur du second UE et un décalage indiqué par des informations de planification.

2. Procédé de communication D2D selon la revendication 1, dans lequel une relation de planification entre des fenêtres de planification est prédéfinie dans la première fenêtre de planification, ou une relation de planification entre les fenêtres de planification est indiquée en fonction d'une signalisation envoyée par un premier nœud de transmission couvrant le premier UE,
dans lequel la relation de planification est déterminée en fonction d'au moins une des informations suivantes :
un nombre maximal de fenêtres de planification prises en charge par le premier nœud de transmission, un séquencement de planification de paquets de données, un séquencement de rétroaction de paquets de données, un séquencement de retransmission de paquets de données, une période de fenêtres de planification et des emplacements de domaine temporel de fenêtres de planification.

3. Procédé de communication D2D selon la revendication 1, dans lequel
tous les paquets de données dans la première fenêtre de planification correspondent à un même élément d'informations de planification, chaque paquet de données dans la première fenêtre de planification correspond à un élément d'informations de planification, ou tous les paquets de données dans la première fenêtre de planification sont divisés en une pluralité de groupes de paquets de données et chaque groupe de paquets de données correspond à un élément d'informations de planification ; les informations de planification comprennent des informations d'indication de paquet de données et les informations d'indication de paquet de données sont configurées pour indiquer s'il faut déterminer un type de paquet de données indiqué par les informations de planification en fonction d'informations de rétroaction envoyées par le premier UE ; dans lequel le type de paquet de données comprend un nouveau paquet de données et un paquet de données retransmis.

4. Procédé de communication D2D selon la revendication 3, dans lequel
quand le premier UE et/ou le second UE sont/est dans un scénario de non couverture, des emplacements de domaine fréquentiel d'une pluralité de paquets de données correspondant à un élément d'informations de planification dans la première fenêtre de planification sont différents.

5. Procédé de communication D2D selon la revendication 1, dans lequel le procédé comprend en outre :
le retour par le premier UE d'informations de rétroaction globales correspondant à des paquets de données dans la première fenêtre de planification (303).

6. Procédé de communication D2D selon la revendication 5, dans lequel un indice de sous-trame des informations de rétroaction est déterminé en fonction d'un indice de sous-trame pour la transmission d'un dernier paquet de données dans la première fenêtre de planification.

7. Procédé de communication D2D selon la revendication 5, dans lequel
un nombre de bits des informations de rétroaction est déterminé en fonction d'un nombre maximal de sous-trames planifiées par les informations de planification ; ou
un nombre de bits des informations de rétroaction est déterminé en fonction d'un nombre maximal de paquets de données planifiés par les informations de planification ; ou
un nombre de bits des informations de rétroaction est déterminé en fonction d'un nombre maximal de sous-trames configurées par la première fenêtre de planification pour la transmission de paquets de données.

8. Procédé de communication D2D selon la revendication 5, dans lequel un emplacement des informations de rétroaction est déterminé en fonction de rangs d'emplacements des paquets de données dans la première fenêtre de planification de l'avant vers l'arrière.

9. Procédé de communication D2D selon la revendication 5, dans lequel une ressource de canal de rétroaction correspondant aux informations de rétroaction est déterminée en fonction d'informations de planification correspondant à la première fenêtre de planification ou est déterminée en fonction d'informations de configuration d'un premier nœud de transmission correspondant au premier UE.

10. Procédé de communication de dispositif à dispositif, D2D, appliqué à un second équipement utilisateur, UE, comprenant les étapes suivantes :
la détermination par le second UE d'un emplacement d'une ressource configurée dans une première fenêtre de planification pour une communication D2D (501) ; et
la transmission par le second UE de paquets de données de communication D2D sur la ressource dont l'emplacement est déterminé (502),
dans lequel la première fenêtre de planification se réfère à :
une fenêtre de planification de demande de répétition automatique hybride, HARQ, une fenêtre d'allocation de ressource planifiée, SA, correspondante dans une communication D2D, ou une fenêtre de planification conjointe pour une pluralité de paquets de données ;
**caractérisé par** l'utilisation, dans un scénario de non couverture, d'un décalage prédéfini entre l'emplacement du paquet de données retransmis dans une fenêtre de planification de retransmission correspondant à une première fenêtre de planification actuelle et l'emplacement du paquet de données transmis en premier lieu dans la première fenêtre de planification, et le décalage prédéfini est déterminé en fonction d'au moins un parmi un premier ID d'utilisateur du premier UE, un second ID d'utilisateur du second UE et un décalage indiqué par des informations de planification.
